# EUROPEAN PATENT APPLICATION

(11) **EP 1 241 826 A2**
(43) Date of publication of application: **18.09.2002**
(21) Application number: 01124791.3
(22) Date of filing: 17.10.2001
(51) Int. Cl.: H04L 9/08

(54) **Cryptographic key management method**

(30) Priority: 14.03.2001 JP 2001071581
(71) Applicant: Hitachi, Ltd., Chiyoda-ku, Tokyo 101-8010 (JP)
(72) Inventor: Ninomiya, Toshihiko, Hitachi Ltd., Intell Prop. Gr, Chiyoda-ku, Tokyo 100-8220 (JP); Matsunaga, Kazuo, Hitachi Ltd., Intell Prop. Group, Chiyoda-ku, Tokyo 100-8220 (JP)
(74) Representative: Strehl Schübel-Hopf & Partner

(57) **Abstract**

A network system has: an application server (120, 121) for providing service; a client (102) for using the service; and a key server (103). The client acquires and stores a management cryptographic key, acquires a transaction cryptographic key to be used for a transaction with the application server, encrypts the transaction cryptographic key with the management cryptographic key, sends the encrypted transaction cryptographic key to the key server, requests the key server to send back the encrypted transaction cryptographic key for a transaction, and decrypts the encrypted transaction cryptographic key with the management cryptographic key to acquire the transaction cryptographic key. The key server stores the sent, encrypted transaction cryptographic key and sends the encrypted transaction cryptographic key to the client in response to a request from the client.

## Description

### BACKGROUND OF THE INVENTION

### Field of the Invention

The present invention relates to techniques of managing keys used for electronic commerce transactions or the like by using a network.

### Description of the Related Art

For electronic commerce transactions or the like over a network, authentication processes for identifying a partner become necessary. A key or certificate (digital ID) is used for an authentication process. Generally, each person creates a transaction public key pair (a pair of a public key and a secret key created by a public key cryptographic scheme) for each application server providing services, and manages it. Therefore, for credit card settlement and bank settlement, each person is required to manage different transaction public key pairs of credit card companies and banks with which the person has accounts.

Servers are known which are used as agents for managing keys of each person. Each agent server executes an application to relay each person to an application server. One example is "Server-Based Wallet Security Proposal" by SETCo which is a promotion institute of SET (Secure Electronics Transactions prepared by Visa International and MasterCard International). According to this proposal, the server side executes a wallet function (electronic settlement software used by consumers), and a client side accesses an application server such as an electronic mall via a Web browser.

JP-A-2000-49766 discloses techniques in which a key management server automatically generates keys and acquires application public key certificates in order to reduce a load of each person required to manage keys for each application server.

As described above, each person is required to manage keys for respective application servers providing services such as electronic commerce transactions, and the management load is not small.

Further, if each person possesses a plurality of transaction public key pairs, a large capacity of a memory for storing those key pairs is required so that transactions from a portable terminal having a small memory capacity is difficult.

Still further, according to the techniques disclosed by JP-A-2000-49766, transaction public key pairs are generated and managed by the key management server itself, posing some security problem.

### SUMMARY OF THE INVENTION

It is an object of the present invention to provide a key management method capable of reducing a load of key management by each person even if keys of respective application servers providing services are required to be managed, facilitating transactions from a portable terminal, and guaranteeing security.

A network system achieving the above object has application servers providing services, clients receiving services, and a key server. The client acquires and stores a management cryptographic key, acquires a transaction cryptographic key to be used for a transaction with the application server, encrypts the transaction cryptographic key with the management cryptographic key, sends the encrypted transaction cryptographic key to the key server, requests the key server to send back the encrypted transaction cryptographic key for a transaction, and decrypts the encrypted transaction cryptographic key with the management cryptographic key to acquire the transaction cryptographic key. The key server stores the sent, encrypted transaction cryptographic key and sends the encrypted transaction cryptographic key to the client in response to a request from the client. When a plurality of transaction cryptographic keys different for respective application servers are prepared, the client encrypts each transaction cryptographic key with the same management cryptographic key.

The above and other objects, features and attendant advantages of the present invention will more easily be understood by reading the following description of the preferred embodiments thereof, taken, only by way of example, in conjunction with the accompanying drawings.

### BRIEF DESCRIPTION OF THE DRAWINGS

Fig. 1 is a diagram showing the structure of a system according to a first embodiment of the invention.
Fig. 2 is a diagram showing the structure of a system according to a second embodiment of the invention.
Fig. 3 is a diagram showing the structure of a system according to a third embodiment of the invention.
Fig. 4 is a diagram showing the structure of a system according to a fourth embodiment of the invention.
Fig. 5 is a flow chart illustrating generation of a management key of a person at a client according to the first embodiment.
Fig. 6 is a flow chart illustrating generation and registration of a transaction key at a client according to the first embodiment.
Fig. 7 is a flow chart illustrating a transaction by a client according to the first embodiment.
Fig. 8 is a flow chart illustrating terms verification (notification of a valid term) at a key management server.
Fig. 9 is a flow chart illustrating terms verification (notification of the maximum number of use times) at the key management server.
Fig. 10 is a flow chart illustrating generation and registration of a transaction key at a client according to the third embodiment.
Fig. 11 is a flow chart illustrating authentication of a transaction public key at a key management server according to the third embodiment.
Fig. 12 is a flow chart illustrating generation of a management public key and registration of a public key in a key management server at a client according to the fourth embodiment.
Fig. 13 is a flow chart illustrating a transaction after person authentication for acquiring a transaction public key pair according to the fourth embodiment.
Fig. 14 is a flow chart illustrating a person authentication process at the key management server according to the fourth embodiment.
Fig. 15 is a diagram showing the form of transaction key indices.
Fig. 16 is a diagram showing the form of business partner indices.
Fig. 17 is a diagram showing the form of person management public key indices.

### DESCRIPTION OF THE EMBODIMENTS

Now, the present invention will be described in conjunction with what is presently considered as preferred or typical embodiments thereof by reference to the drawings. In the following description, like reference characters designate like or corresponding parts throughout the several views.

### 1. First Embodiment

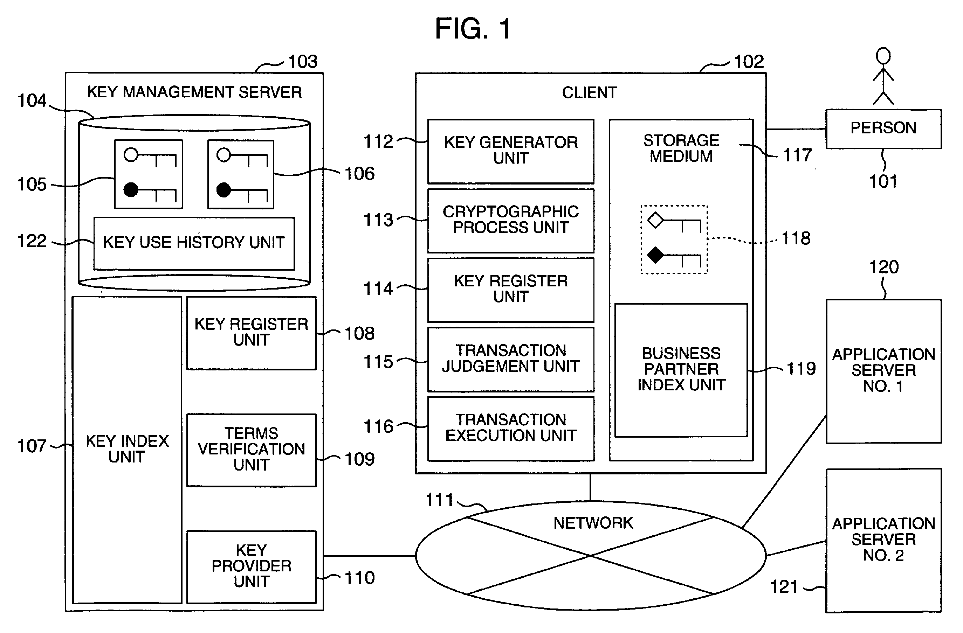

Fig. 1 is a diagram showing the structure of a system according to the first embodiment of the invention. In the first embodiment, each client possesses business partner indices. A client 102, a key management server 103, an application server No. 1 120, and an application server No. 2 121 are connected to a network 111 via wires or radio waves.

Different cryptographic schemata may be used for communications between the client and application No. 1 and between the client and application No. 2. Even if both the communications use the same cryptographic scheme, it is preferable to use different cryptographic keys in order to improve security. The embodiment uses different cryptographic keys for respective communication partners, and provides a method and system for managing cryptographic keys easily and safely.

Although not shown, the network 111 may connect a certification authority (CA).

The client 102 is a personal computer, a portable terminal, a portable telephone or the like used by each person 101 and having a communication function. The client is assigned an ID unique in the system. The client 102 has a key generator unit 112, a cryptographic process unit 113, a key register unit 114, a transaction judgement unit 115, a transaction execution unit 116 and a storage medium 117. The key generator unit 112 generates a key management key 118 and transaction public key pairs 105 and 106 for the person. The cryptographic process unit 113 encrypts the transaction public key pairs 105 and 106 generated by the key generator unit 112 with the key management key 118, and decrypts the encrypted transaction public key pairs 105 and 106 acquired from the key management server 103 with the key management key 118. The key register unit 114 registers the encrypted transaction key pairs 105 and 106 in the key management server 103.

The transaction judgement unit 115 receives a report of the use terms such as a valid term and the maximum number of use times of the transaction public key pairs 105 and 106 from the key management server 103, and judges whether or not a transaction is executed. If the transaction judgement unit 115 judges that a transaction is executed, the transaction execution unit 116 executes the transaction with the application server No. 1 120 and application server No. 2 121 by using the transaction public key pairs 105 and 106 acquired from the key management server 103 and decrypted by the cryptographic process unit 113. The storage medium 117 stores the key management key 118 and business partner indices 119 indicating the correspondence between transaction public key pair and each application server.

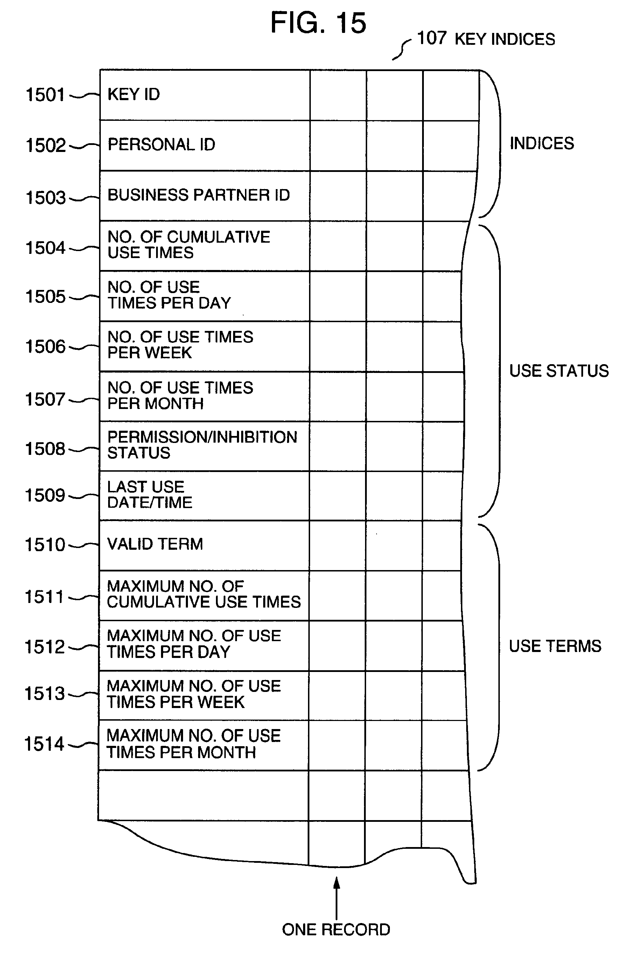

The key management server 103 has a key storage unit 104, a key index unit 107, a key register unit 108, a terms verification unit 109 and a key provider unit 110. The key storage unit 104 stores the transaction public key pairs 105 and 106 (encrypted with the key management key 118) requested to be registered by the client 102. It also stores a key use history 122. The key index unit 107 has indices indicating the relation between a registered key, a person, and a business partner, the contents of the indices being shown in Fig. 15 (to be described later). The key register unit 108 registers the transaction public key sent by the client 102 in the key storage unit 104 and updates the key index unit 107. The terms verification unit 109 verifies the valid term, the maximum number of use times and the like of the transaction public keys 105 and 106, and if the valid term expires or if the use time exceeds the maximum number or the like, this effect is notified to the client 102. The key provider unit 110 transmits the transaction public key pair registered in the key storage unit 104 to the client 102 in response to a request from the client 102.

Although the key management key 118 is shown in Fig. 1 as a pair of a secret key and a public key of the public key cryptographic scheme, it is not limited thereto but it may be a single common key of the common key cryptographic scheme.

Also, the transaction public key pairs 105 and 106 shown in Fig. 1 may be a single common key of the common key cryptographic scheme for each communication partner.

Each unit shown in Fig. 1 is realized by a software program or a table. The cryptographic process unit may be realized by an exclusive processor.

The operation of the system of the first embodiment described above will be described with reference to the flow charts.

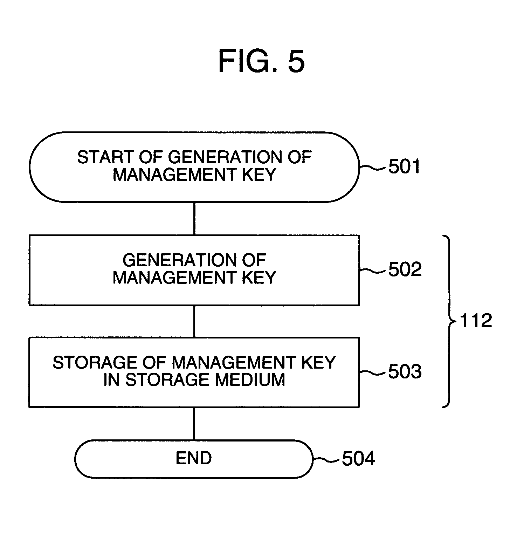

Fig. 5 is a flow chart illustrating generation of the management key 118 of a person in the system shown in Fig. 1. When a start of generation of the management key 118 is instructed by a person 101 at the client 102 (Step 501), the key generator unit 112 of the client 102 shown in Fig. 1 generates a cryptographic key (Step 502). As cryptographic technologies, RSA cryptographic technologies, elliptic curve cryptographic technologies and the like already well-known as public key cryptographic technologies can be utilized. Common key cryptographic technologies can also be used. The generated cryptographic key 118 is stored in the storage medium 117 (Step 503). The storage medium 117 may be a magnetic disc, a RAM, an IC card or the like.

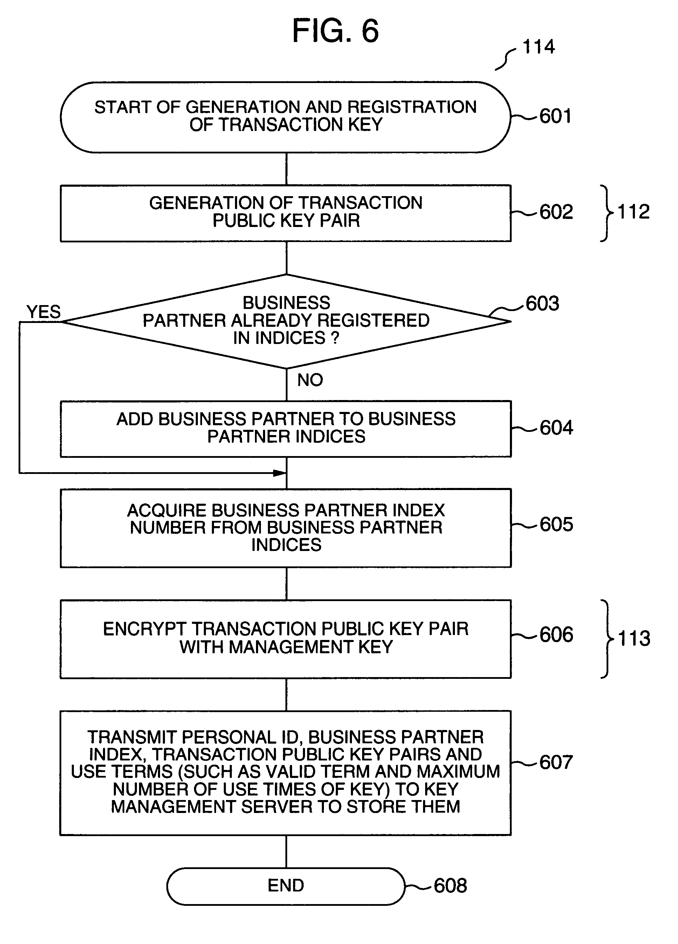

Fig. 6 is a flow chart illustrating generation and registration of transaction keys 105 and 106 of the system shown in Fig. 1. When a start of generation and registration of a transaction key is instructed by a person 101 at the client 102 (Step 601), the key generator unit 112 of the client 102 shown in Fig. 1 generates a transaction public key pair (Step 602). Also in this case, cryptographic technologies similar to those used for the management key are utilized. In this example, it is assumed that the public key cryptographic system is used.

Next, the client 102 checks whether the application server using this public key pair is registered in the business partner index unit 119 of the storage medium 117 (Step 603). If not registered, the application server is added to the business partner index unit 119 as a new business partner (Step 604).

Next, the client 102 acquires a business partner index number (business partner ID) (Step 605). The cryptographic process unit 113 encrypts the transaction public key pair generated at Step 602 with the management key 110 stored in the storage medium 117 (Step 606). The encrypted transaction key pair, a personal ID, the transaction ID, and the use terms such as the valid term and the maximum number of use times of the key, are transmitted to the management server 103 which in turn stores them in the key storage unit 104 (Step 607).

A registration instruction for a business' partner and the use terms of the key can be interactively entered by the person 101 from a display device and an input device (both not shown) of the client 102. If the public key is made public via CA, the public key and necessary information are sent to CA.

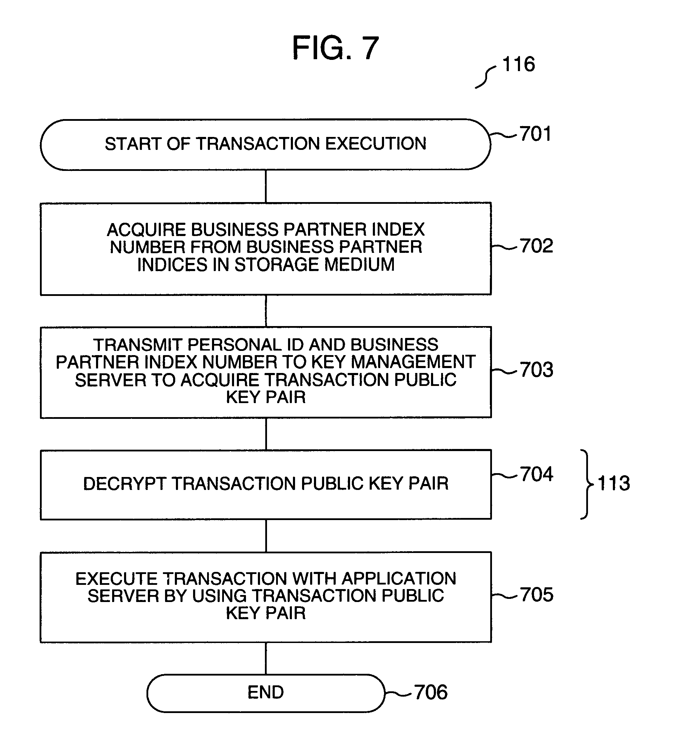

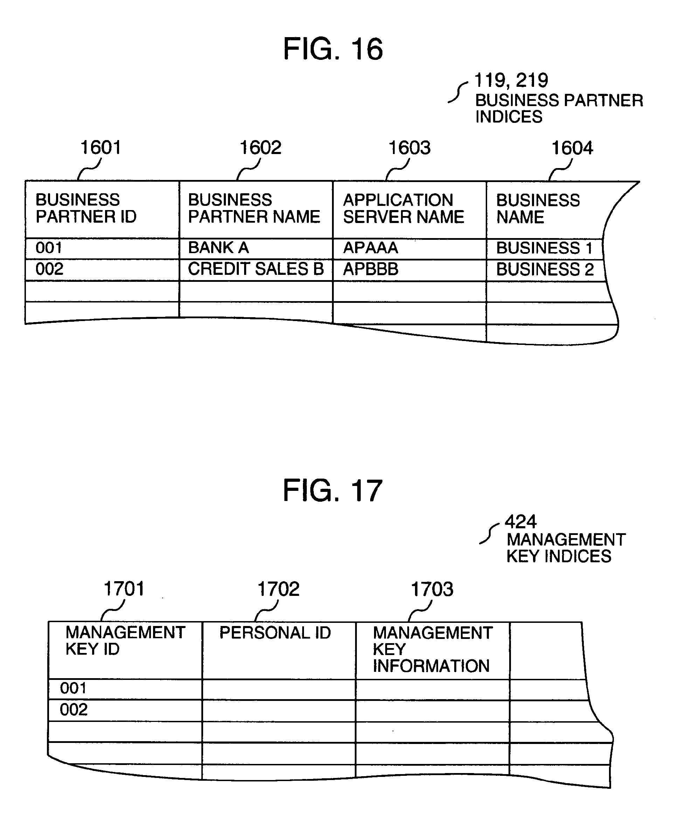

Fig. 7 is a flow chart illustrating a transaction to be executed by the system shown in Fig. 1. When a start of execution of a transaction is instructed (Step 701), the client 102 searches the business partner index unit 119 stored in the storage medium 117 to acquire the business partner index number (business partner ID) of the application server to be accessed (Step 702). For example, in the business partner indices shown in Fig. 16, the person 101 can identify each business partner ID like "if a transaction with Bank A is to be executed, the business partner ID is 001". Next, the personal ID and business partner ID are transmitted to the key management server 103 to request to send back the transaction public key pair (Step 703). Since the acquired transaction public key pair is encrypted, this public key pair is decrypted with the management key 118 of the person (Step 704). By using the decrypted transaction public key, the transaction with the application server is executed (Step 706).

The key acquisition request to the key management server 103 may be interactively performed by the person 101 via the display/input device of the client 102, or it may be implemented in an application server transaction protocol.

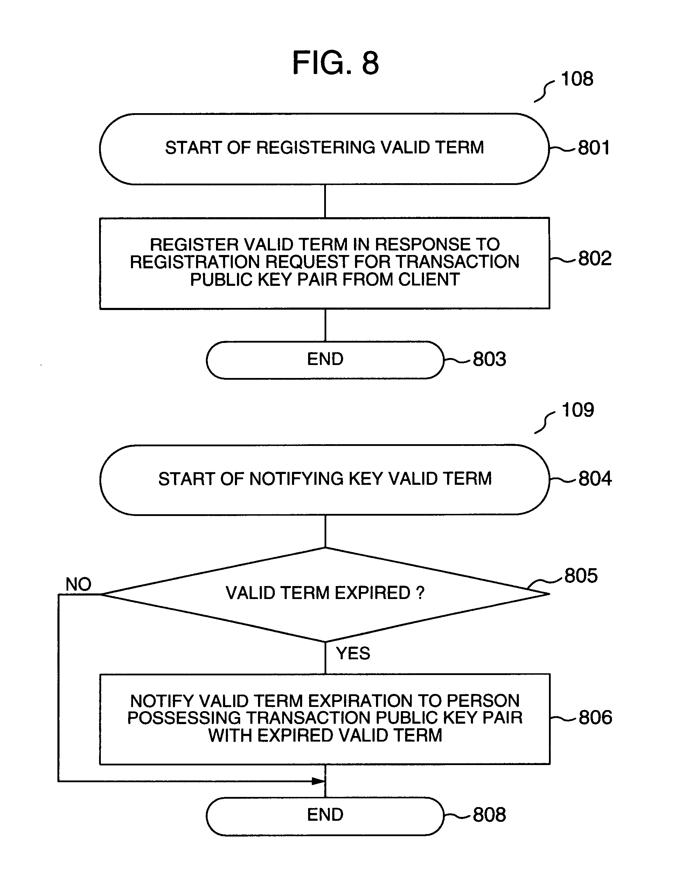

Fig. 8 is a flow chart illustrating an operation of checking the valid term and notifying its expiration, to be executed by the terms verification unit 109 of the key management server 103 of the system shown in Fig. 1. In a process (Step 801) of terms verification (notification of a valid term) by the key management server 103, the valid term of the key which was transmitted at the same time when the client 102 requested to register the transaction public key pair, is registered in the key index unit 107 shown in Fig. 15 (Step 802).

Thereafter, a timer notification process (Step 804) is repetitively executed at a predetermined time interval. In this timer notification process, the valid terms of all transaction public key pairs registered in the key index unit 107 are checked (Step 805). If there is any transaction public key pair whose valid term expired, the valid term expiration is notified to the client having the expired transaction public key pair (Step 806). Therefore, the person 101 is not required to always confirm the valid term expiration of the transaction key, but when the notice is received, the transaction public key pair is generated (updated) to continuously use the valid public key pair.

In this example, although the notice is given when the valid term expires, the notice may be given during a predetermined period before the valid term expiration. An e-mail may be used for such notification.

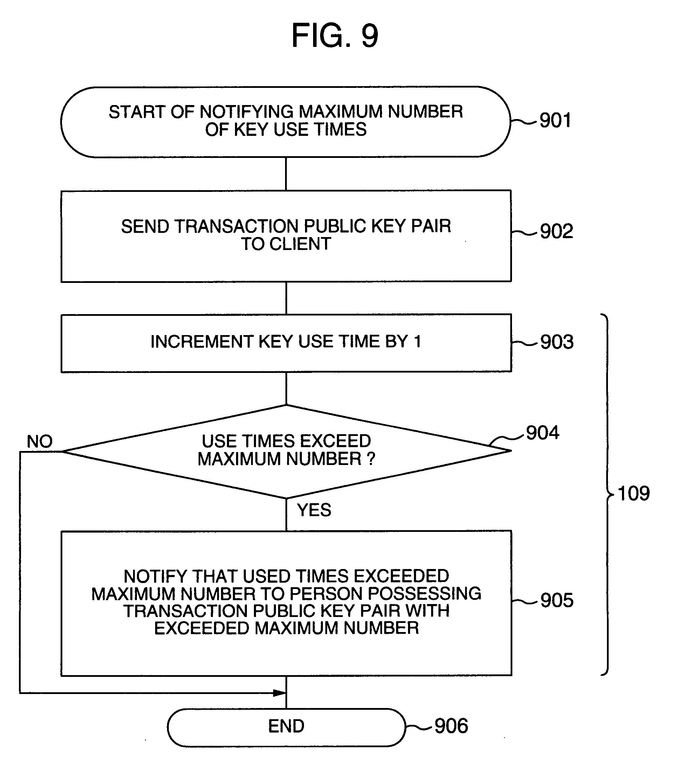

Fig. 9 is a flow chart illustrating an operation of checking the number of use times and notifying that the number of use times exceeds the maximum number, to be executed by the terms verification unit 109 of the key management server 103 of the system shown in Fig. 1. The maximum number of use times of a transaction public key pair transmitted from the client 102 at the same time when the client 102 requested to register the transaction public key pair, is registered in advance in the key index unit 107 shown in Fig. 15. As shown in Fig. 15, the key management in the unit of time becomes possible if the maximum number of cumulative use times 1510, the maximum number of use times per day 1511, the maximum number of use times per week 1512 and the maximum number of use times per month 1513 are registered. Depending upon use conditions, another unit of time may be used.

The terms verification (notification of the maximum number of use times) process to be executed by the key management server 103 shown in Fig. 9 is activated when an acquirement request for the transaction public key pair is received from the client. When this process starts (Step 901), the transaction public key pair is allowed to be used, i.e., the transaction public key pair is sent to the client (Step 902) and the numbers of use times 1505 to 1507 are incremented (counted up) by 1 (Step 903). In this case, if the current time is the end time of each of the day, week or month, the counters for the numbers of use times 1505 to 1507 are cleared to zero and then counted up by 1. Next, the maximum numbers of use times of each time unit (day, week and month) are checked (Step 904). If there is any number of use times exceeding the maximum number, a notice that the number of use times exceeded the maximum number is notified to the client with the person possessing the corresponding transaction public key pair (Step 905). In this case, the number of use times, the last use time and use history are also sent upon request.

Upon reception of the notice that the number of use times exceeded the maximum number, the person 101 compares the received data with the number of use times, last use time and use history recorded by the person to thereby judge if there is an illegal use. If it is judged that there is an illegal use, the person 101 is required to change the transaction public key pair registered in the key management server 103 and the additional information such as a password of the key management server 103. The person 101 may inquire the key management server 103 to acquire the key use status information such as the number of use times, last use time and use history and judge if there is an illegal use, not only when a report (step 905) indicating the number of use times exceeded the maximum number is received, but also at any time desired by the person 101 independently from the key acquirement request.

Fig. 15 shows an example of the key index unit 107 in the key management server 103. The key index unit is constituted of: a key ID 1501 for identifying a transaction public key pair; a personal ID 1502 for identifying a key owner; a business partner ID 1503 for identifying a business partner application server; a counter 1504 for counting the number of cumulative key use times; a counter 1505 for counting the number of use times per day; a counter 1506 for counting the number of use times per week; a counter 1507 for counting the number of use times per month; a status flag 1508 indicating whether the key use is permitted or inhibited; a field 1509 for setting the last key use day and time; a field 1510 for setting a key valid term; a field 1511 for setting the maximum number of cumulative use times; a field 1512 for setting the maximum number of use times per day; a field 1513 for setting the maximum number of use times per week; a field 1514 for setting the maximum number of use times per month; and the like.

The key index unit 107 may also contain a pointer to the storage address of a key, and a cryptographic system name.

Fig. 16 shows an example of the business partner index unit 119. The business partner index unit is constituted of a business partner ID 1601 for identifying a business partner application server, a business partner name 1602, an application server name 1603, business contents 1604 and the like.

### 2. Second Embodiment

Another embodiment will be described. Only different points from the first embodiment will be described.

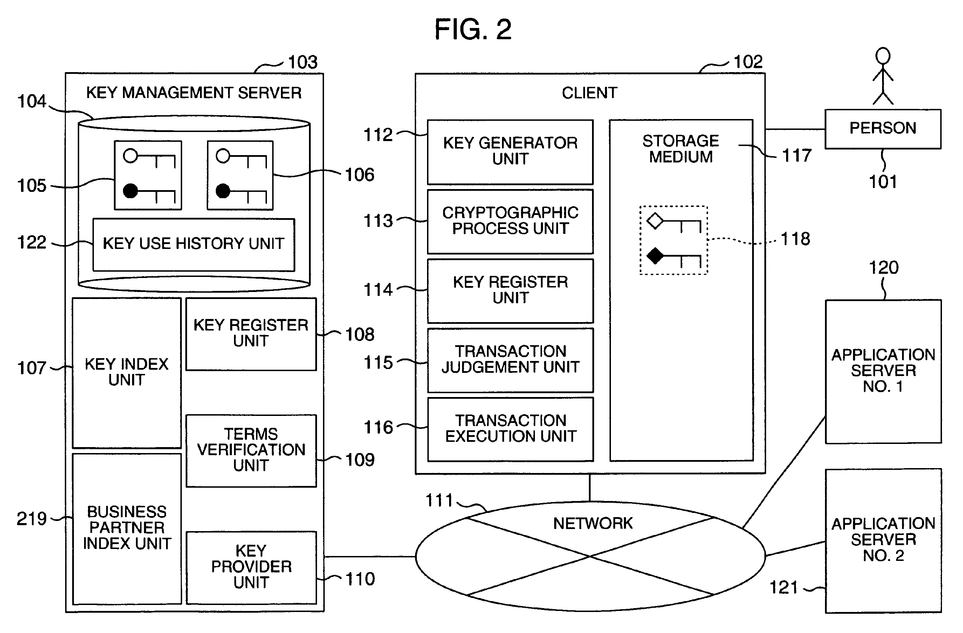

Fig. 2 is a diagram showing the system according to the second embodiment of the invention, the system having a business partner index unit 219 in the key management server 103. Although the business partner index unit 119 of the first embodiment exists in the storage medium 117 of the client 102, the business partner index unit 219 exists in the key management server 103.

In the first embodiment, business partner ID's are assigned and managed independently by each client, whereas in the second embodiment, business partner ID's are assigned and managed by the key management server 103 and determined uniquely in the system.

### 3. Third Embodiment

The third embodiment will be described. Only different points from the second embodiment will be described. In the third embodiment, the key management server 103 has a partial function of CA to authenticate the transaction public key.

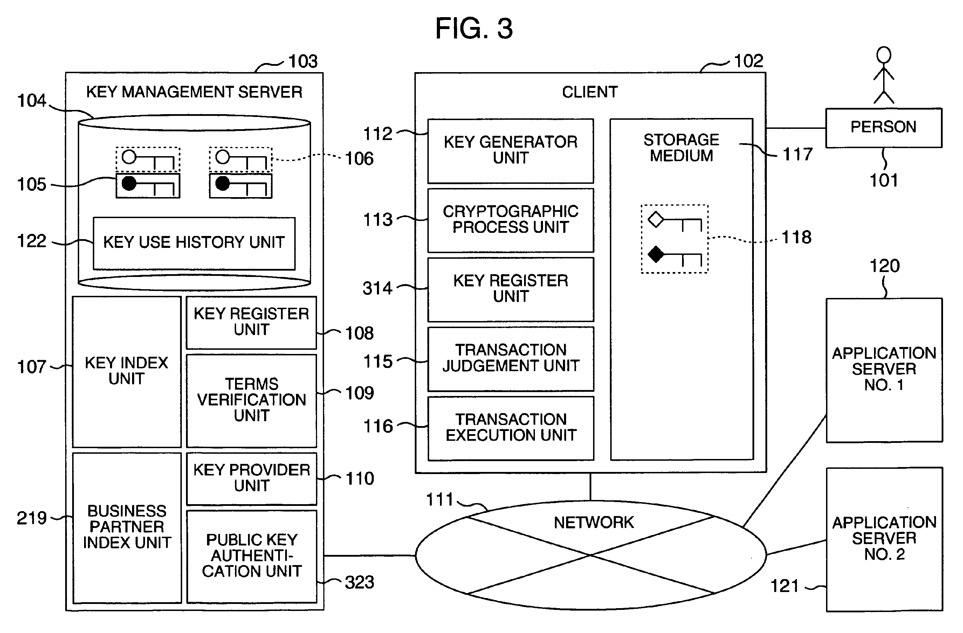

Fig. 3 is a diagram showing the structure of a system according to the third embodiment of the invention. In this embodiment, the public key of a transaction public pair key is registered in the key management server without encrypting it. As compared to Fig. 2, a public key authentication unit 323 is added to the key management server 103. Since the public key of a transaction public key pair is not encrypted, the key management server 103 can authenticate the transaction public key of the person 101 when another client, an application server 120 or 121 requests for verification of the transaction public key.

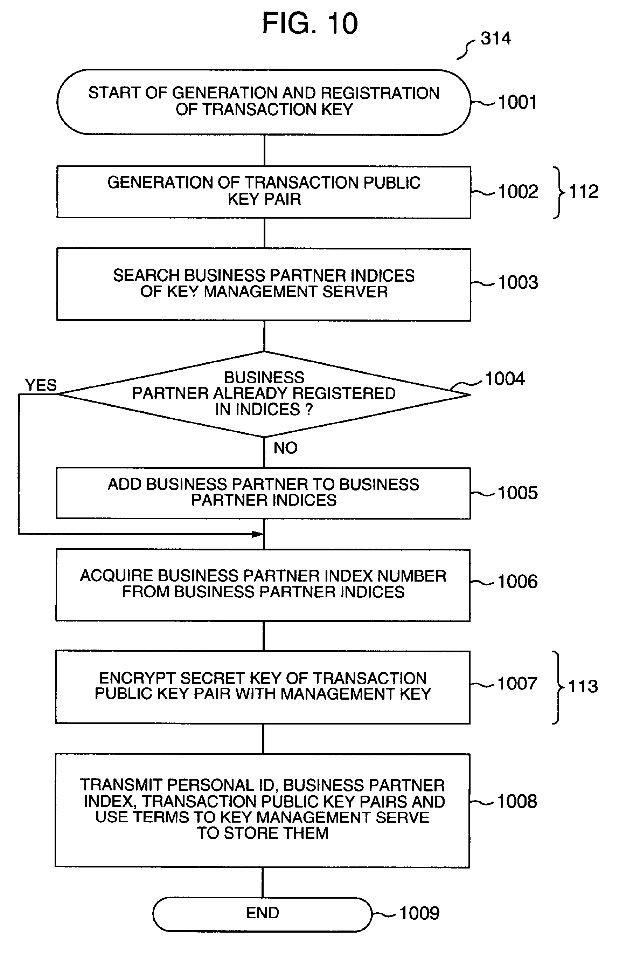

Fig. 10 is a flow chart illustrating generation and registration of transaction keys 105 and 106 of the system shown in Fig. 3, in which encryption of only the secret key of the transaction key pair is performed in the system having the business partner index unit 219 in the key management server 103. Steps 1002 and 1003 are similar to Steps 602 and 603 shown in Fig. 6, and Steps 1004 to 1008 are similar to Steps 603 to 607 shown in Fig. 6. Different points from Fig. 6 reside in that when the business partner index unit 219 is searched, not the business partner index unit of the client but the business partner index unit 219 of the key management server 103 is searched (Step 1003), and only the secret keys of the transaction public key pairs 105 and 106 are encrypted with the management key 118 of the person (Step 1007).

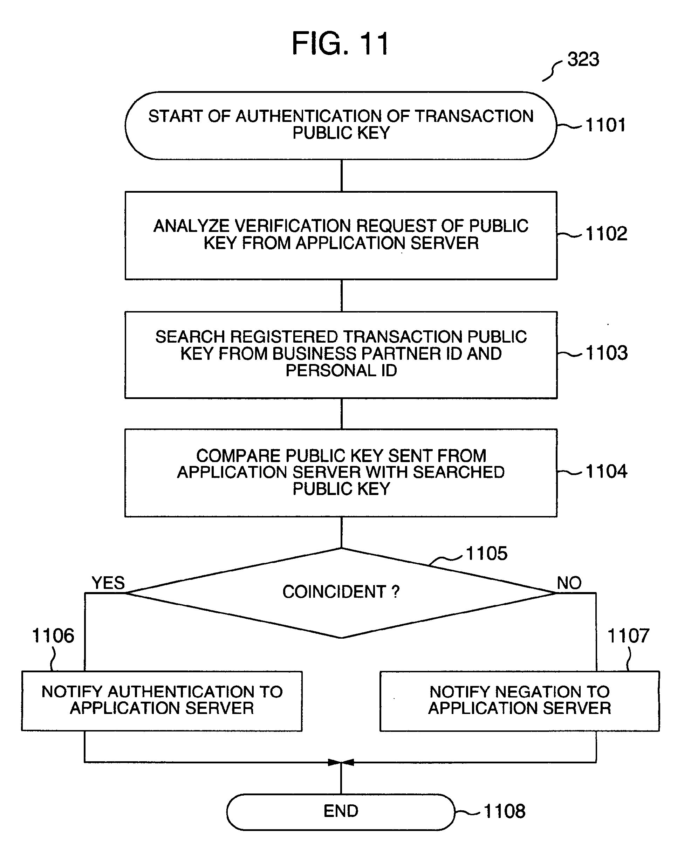

Fig. 11 is a flow chart illustrating authentication of public keys of the transaction public key pairs 105 and 106 registered without encryption in the flow chart of Fig. 10, the authentication being executed by the key management server 103 of the system shown in Fig. 3. In this example, it is assumed that the application server No. 1 120 requests for verification of the transaction public key of the person 101.

The verification request includes an ID of a person who made public the public key, the name (or ID) of a server who requested the verification, and the public key.

When the server 103 receives a verification request, authentication process of the transaction public key starts (Step 1101). The server 103 analyzes the verification request for the transaction public key (Step 1102), and searches the transaction public key pair corresponding to the application server No. 1 120 and personal ID from the business partner index unit 219 to find the public key (Step 1103). This public key is compared with the public key sent from the application server No. 1 120 (Step 1104). If both the keys coincide with each other, a verification success is notified to the application server No. 1 120 (Step 1106). If both the keys do not coincide, a negation is notified (Step 1107).

This procedure may be performed in the protocol when a transaction starts between the server and client.

### 4. Fourth Embodiment

The fourth embodiment will be described. Only different points from the third embodiment will be described. Also in this embodiment, the key management server 103 has a partial function of CA to authenticate a person accessed to the key management server 103.

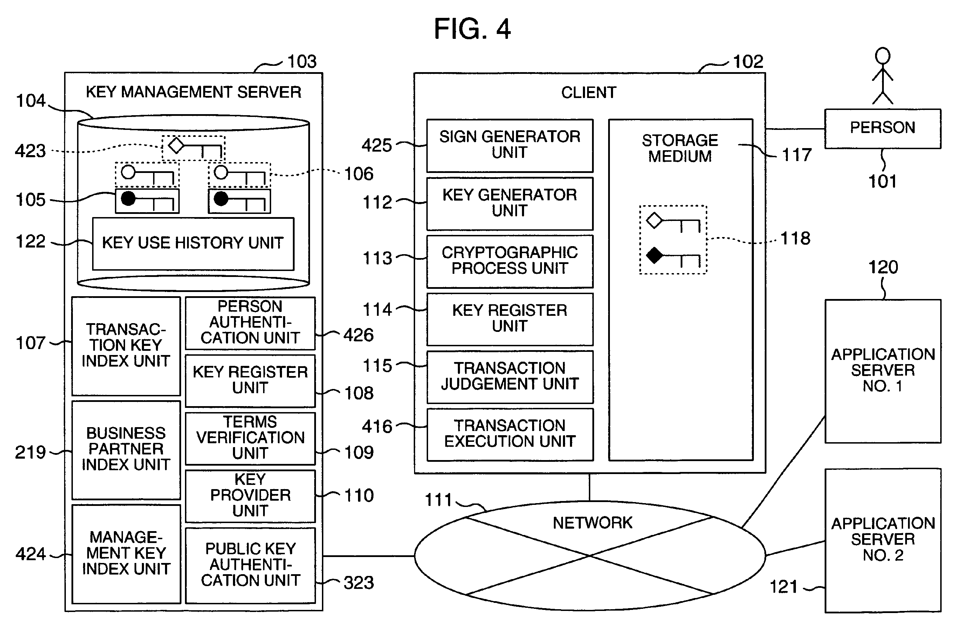

Fig. 4 is a diagram showing the structure of a system according to the fourth embodiment of the invention. In this embodiment, the public key of a key management public key pair is registered in the key management server.

The key management key 118 stored in the storage medium 117 of the client 102 is a public key pair. A person authentication unit 426 is added to the key management server 103, and a key management public key 423 which is the public key of the key management key pair 118 is stored in the key storage unit 104. The person authentication unit 426 receives a person certificate signed with the secret key of the key management key pair 118 from the client 102 and verifies it using a key management public key 423. The key management server 103 has a management key index unit 424 for managing key management public keys.

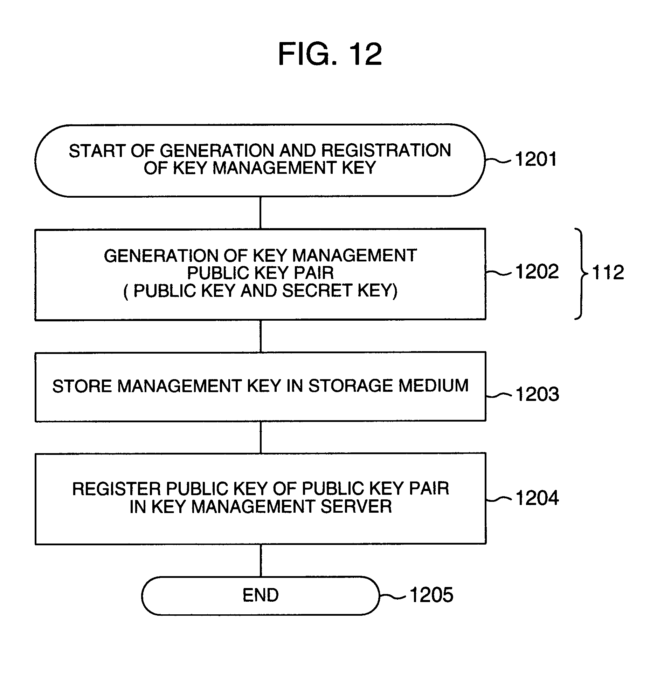

Fig. 12 is a flow chart illustrating generation and registration of the management key 118 of the person in the system shown in Fig. 4, i.e., an operation of registering the public key of the public key pair 118 in the key management server 103 as the key 423. Steps 1202 and 1203 are similar to Steps 502 and 503 shown in Fig. 5. Different points from Fig. 5 reside in that the key management key is generated always as a public key pair (public key and secret key) (Step 1202) and the public key of the key management public key pair 118 of the person is registered in the key management server as the key 423 (Step 1204).

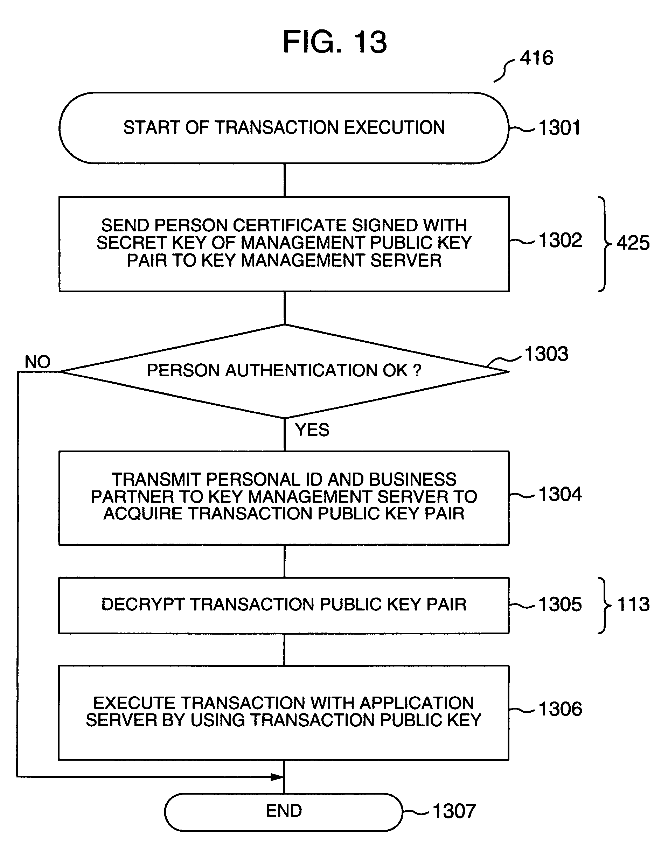

Fig. 13 is a flow chart illustrating a transaction at the client 102 of the system shown in Fig. 4. Steps 1304 to 1306 are similar to Steps 703 to 705 shown in Fig. 7. Different points from Fig. 7 reside in that before a transaction, a person certificate signed with the secret key of the key management public key pair 118 is sent to the key management server 103 (Step 1302). If OK of person authentication is returned from the key management server (Step 1303), the processes similar to Fig. 7 are performed. If NG of person authentication is returned, the transaction cannot be executed.

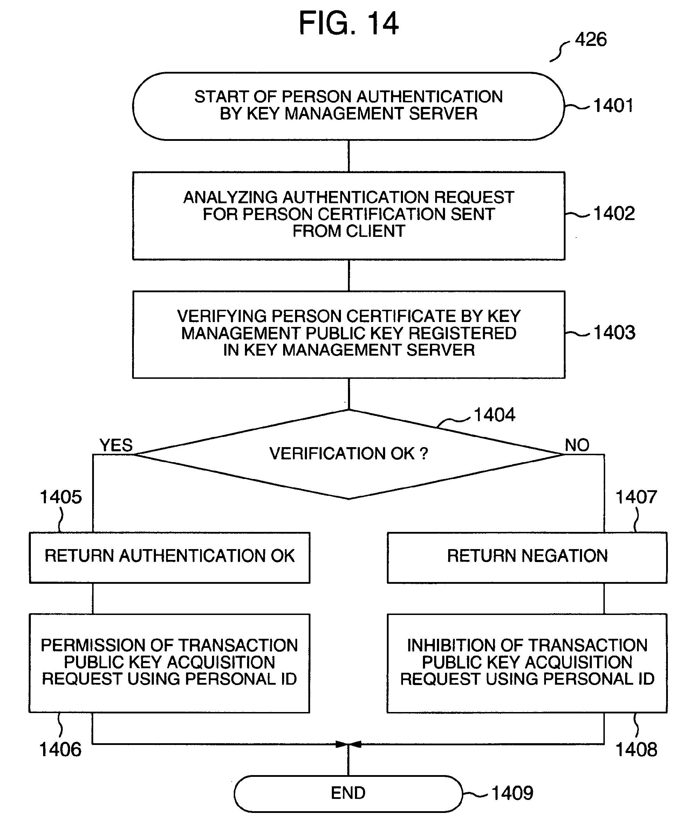

Fig. 14 is a flow chart illustrating a person authentication process to be executed by the key management server 103 of the system shown in Fig. 4.

The person authentication process starts when the person sends a person authentication request together with a digitally signed certificate to the key management server 103 (Step 1401). The person authentication request is analyzed (Step 1402). The signature of the sent person certificate is decrypted with the key management public key 423 registered in the key management server 103 to verify the person certificate (Step 1403). If verification OK, person authentication OK is returned to the client 102 (Step 1405) to permit the transaction public key acquisition request using the personal ID (Step 1406), whereas if verification NG, negation of person authentication is returned to the client 102 (Step 1407) so as not to permit the transaction public key acquirement request using the personal ID (Step 1408). As shown in Fig. 15, the key index unit 107 has a flag 1508 indicating the permission/inhibition of the key acquirement.

Fig. 17 shows an example of the management key index unit 424 possessed by the key management server 103. The management key index unit includes a management key ID 1701 for identifying the management key, a personal ID 1702 for identifying an owner, and management key information 1703 containing additional information of the management key such as the type of a cryptographic system.

### 5. Modifications

In the embodiments, although key generation is performed inside the client 102, it may be performed by an apparatus other than the client.

In transactions via a network, an electronic certificate issued by a Certificate Authority is used in some cases in order to authenticate each individual. The key management server may store and manage an electronic certificate as well as the key.

Many modifications and variations of the present invention are possible in the light of the above techniques. It is therefor to be understood that with the scope of the appended claims, the invention may be practiced otherwise than as specifically described.

## Claims

1. A cryptographic key management method comprising steps of:
generating and storing a management cryptographic key;
generating a transaction cryptographic key;
encrypting the transaction cryptographic key with the management cryptographic key; and
storing the encrypted transaction cryptographic key in a key management server (103).

2. A cryptographic key management method according to claim 1, wherein if a plurality of transaction cryptographic keys are generated, each of the transaction cryptographic keys is encrypted with the management cryptographic key.

3. A cryptographic key management method according to claim 1, further comprising steps of:
acquiring the encrypted transaction cryptographic key from the key management server;
decrypting the encrypted transaction cryptographic key with the management cryptographic key; and
acquiring the transaction cryptographic key.

4. A cryptographic key management method according to claim 1, wherein the transaction cryptographic key is a pair of a public key and a secret key of a public key cryptographic scheme.

5. A cryptographic key management method according to claim 4, wherein:
the secret key of the transaction cryptographic key is encrypted with the management cryptographic key and the encrypted secret key and the plaintext public key are stored in the key server; and
the key server checks whether a received public key is coincident with the stored public key, and notifies the check result to a public key sending site.

6. A cryptographic key management method according to claim 3, wherein:
the management cryptographic key is a pair of a public key and a secret key of a public key cryptographic scheme, and the public key of the management cryptographic key is stored in the key server; and
the key server authenticates a requesting site requesting for acquisition of the transaction cryptographic key, by using the stored public key.

7. A network system comprising:
an application server (120, 121) for providing services;
a client (102) for using the services; and
a key server (103),
wherein:
said client acquires and stores a management cryptographic key, acquires a transaction cryptographic key to be used for a transaction with said application server, encrypts the transaction cryptographic key with the management cryptographic key, sends the encrypted transaction cryptographic key to said key server, requests the key server to send back the encrypted transaction cryptographic key for the transaction, and decrypts the encrypted transaction cryptographic key with the management cryptographic key to acquire the transaction cryptographic key; and
said key server stores the sent, encrypted transaction cryptographic key and sends the encrypted transaction cryptographic key to said client in response to a request from the client.

8. A network system according to claim 7, wherein when said client acquires a plurality of transaction cryptographic keys different for said respective application servers, said client encrypts each of the transaction cryptographic keys with the management cryptographic key.

9. A network system according to claim 7, wherein:
said client sends a valid term of the encrypted transaction cryptographic key together with the encrypted transaction cryptographic key to the key server; and
said key server notifies an expiration of the valid term of the transaction cryptographic key.

10. A network system according to claim 7, wherein:
said client sends the maximum number of use times of the transaction cryptographic key together with the encrypted transaction cryptographic key to said key server; and
said key server counts the number of acquisition requests for the encrypted transaction cryptographic key and notifies uses over the maximum number to said client.

11. A network system according to claim 7, wherein:
the management cryptographic key is a pair of a public key and a secret key of a public key cryptographic scheme;
said client stores the public key of the management cryptographic key in said key server; and
said key server authenticates a requesting site requesting acquisition of the management cryptographic key by using the stored public key, and if authentication succeeds, sends the transaction cryptographic key to said requesting site.

12. A network system according to claim 7, wherein:
the transaction cryptographic key is a pair of a public key and a secret key of a public key cryptographic scheme;
said client encrypts the secret key of the transaction cryptographic key with the management cryptographic key and stores the encrypted secret key and the plaintext public key in said server; and
said server checks whether the public key sent from said application server is coincident with the stored public key of said client and notifies the check result to said application server.
